# EUROPÄISCHE PATENTSCHRIFT

(11) **EP 1 902 288 B1**
(45) Veröffentlichungstag und Bekanntmachung des Hinweises auf die Patenterteilung: **13.07.2016**
(21) Anmeldenummer: 06763210.9
(22) Anmeldetag: 22.05.2006
(51) Int. Cl.: G01L 3/10, G01L 5/22

(54) **SENSORANORDNUNG ZUR ERFASSUNG EINES DIFFERENZWINKELS**
SENSOR ARRANGEMENT FOR DETECTING A DIFFERENCE ANGLE
DISPOSITIF CAPTEUR POUR SAISIR UN ANGLE DIFFERENTIEL

(30) Priorität: 04.07.2005 DE 102005031086
(43) Veröffentlichungstag der Anmeldung: 26.03.2008
(73) Patentinhaber: ROBERT BOSCH GMBH, 70442 Stuttgart (DE)
(72) Erfinder: REICHERT, Andreas, 71720 Oberstenfeld (DE)
(86) Internationale Anmeldenummer: PCT/EP2006/062482
(87) Internationale Veröffentlichungsnummer: WO 2007/003468

(56) Entgegenhaltungen:
- GB-A- 2 379 277
- JP-A- 6 011 402
- US-A1- 2004 194 560

## Beschreibung

### Stand der Technik

Die Erfindung betrifft eine Sensoranordnung zur Erfassung eines Differenzwinkels, insbesondere zu Erfassung eines Differenzwinkels, der durch ein auf eine Welle wirkendes Drehmoment hervorgerufen wird und vorzugsweise mit einem Magnetfeld empfindlichen Sensor detektierbar ist, nach dem Oberbegriff des unabhängigen Anspruchs.

Solche Sensoranordnungen werden zur Erfassung des Differenzwinkels in unterschiedlichen Ausführungsformen, beispielsweise in Fahrzeugen und zur Erfassung des Drehmoments an einer drehenden Welle bereits angewandt. Zum Beispiel können mit auf dem Halleffekt basierenden Sensoren Magnetfeldänderungen detektiert werden, die durch die Winkeländerung bzw. das Drehmoment verursacht werden.

Insbesondere Fahrzeuge mit elektrisch unterstützten Lenksystemen benötigen in der Regel ein Drehmomentsignal, das als Stellgröße für die Lenkunterstützung des Fahrers des Kraftfahrzeugs dienen kann.

Aus der EP 1 269 133 B1 ist eine magnetische Einrichtung beschrieben, mittels derer sich ein Drehmomentsignal erzeugen lässt. Der Magnetkreis der Einrichtung besteht aus einem Magnetring, zwei Fluxringen und einem bzw. mehreren Hallelementen. Durch Verdrehung des Magneten in den Fluxringen wird die magnetische Feldstärke zwischen den Fluxringen verändert und mit einem oder mehreren Hallelementen gemessen. Die mit den jeweiligen Fluxringen in Verbindung stehenden Zähne greifen in axialer Richtung ineinander und greifen auf dem Umfang die Magnetfeldinformation ab, um sie dem Hallelement zuzuführen. Die Geometrie ist daher relativ unempfindlich in tangentialer und radialer Richtung. Axiale Toleranzen der Hallelemente zu den Fluxringen wirken sich jedoch gravierend auf den Messeffekt aus. So bewirkt die Vergrößerung des Luftspalts einen geringeren magnetischen Fluss mit nachteiligem Einfluss auf den Drehmomentsensor.

Aus der DE 202 20 388 U1 ist eine weitere magnetische Einrichtung zur Drehmomentermittlung bekannt, bei der die beiden Fluxringe röhrenförmig ausgeführt sind. Da der radiale Abstand zwischen den Röhren annähernd gleich ausgeführt ist, bildet sich der Magnet relativ groß aus, was zu Schwierigkeiten in der Durchmagnetisierung und Poltrennung des Magneten führt. Die Verwendung eines magnetischen Rückschlussbleches, welches den magnetischen Fluss durch Kurzschließen des rückseitigen Magnetpols erhöht, ist nicht vorgesehen, so dass der Sensor anfällig gegenüber äußeren Störfeldern ist. Zu dem erhöhen sich die Luftspalte zwischen den Fluxröhren und dem Magnet, da die zwei Röhren mit ihrer jeweiligen Exzentrizität und Toleranz über den Magneten bewegt werden müssen.

Aus der US 2004/0194560 ist ein Drehmomentsensor bekannt. Hierzu sind in axialer Richtung beabstandet voneinander angeordnete Zähne vorgesehen. Die entsprechenden Fluxringe weisen in axialer Richtung denselben Radius auf. Die Sammenelemente umgreifen die Fluxringe in radialer Richtung.

Es ist Aufgabe der vorliegenden Erfindung, die genannten Nachteile im Stand der Technik zu minimieren. Diese Aufgabe wird durch die Merkmale des unabhängigen Anspruchs gelöst. Erfindungsgemäß ist vorgesehen, dass die Fluxringe mit vorzugsweise ineinander greifenden Zähnen die Magnetinformation des Magnetpolrads stirnseitig sammeln. Die Zähne der Fluxringe sind radial orientiert. Das Magnetpolrad ist so angeordnet, dass dessen Magnetinformation von den radial orientierten Zähnen zum Aufbau eines Magnetflusskreises abgegriffen werden können. Vorzugsweise weisen die Fluxringe unterschiedliche Radien auf, wobei die mit den entsprechenden Fluxringen in Verbindung stehenden Zähne radial ineinander greifen. Die Länge der Zähne in radialer Richtung ist hierbei so gewählt, dass die Magneten des Magnetpolrats in radialer Richtung sicher magnetisch überdeckt werden. Ferner können die beiden Fluxringe aufgrund von Toleranzen in axialer Richtung zwischen den Sammelblechen eintauchen, ohne den Magnetfluss wesentlich zu ändern. Durch die erfindungsgemäße Sensoranordnung ergibt sich ein optimiertes Toleranzverhalten des Magnetkreises in axialer Richtung. Axiale mechanische Verschiebungen wirken sich somit in geringerem Maße auf die Güte der Signalerfassung aus. Weiterhin ermöglicht die genannte Anordnung eine einfachere Montage, da sämtliche Komponenten von einer Seite aus montiert werden können.

Zudem ermöglicht dieses Design, in einfacher Weise magnetische Rückflussbleche zu verwenden, um den Sensor robust gegen äußere Störfelder zu machen, da der magnetische Fluss erhöht wird.

Weitere zweckmäßige Weiterbildungen ergeben sich aus weiteren abhängigen Ansprüchen und aus der Beschreibung.

### Zeichneng

Ausführungsbeispiele der Erfindung werden an Hand der Zeichnung erläutert. Es zeigen:
- Figur 1: eine perspektivische Darstellung der Komponenten der Sensoranordnung,
- Figur 2: eine Explosionsdarstellung der Sensorkomponenten,
- Figur 3: Magnetfluss-Sammelelemente,
- Figur 4a: die magnetische Nullstellung der Zähne zum Magneten in der Draufsicht von oben,
- Figur 4b: die magnetische Nullstellung der Zähne zum Magneten in der Draufsicht von unten,
- Figur 5 und Figur 6: Schnittanschichten zu Erläuterung eines Ausführungsbeispiels mit einer axialen Verschiebung der Stege der Fluxringe zur Verringerung des magnetischen Nebenschlusses zwischen den Fluxringen,
- Figur 7: einen Schnitt der Sensoranordnung,
- Figur 8: eine perspektivische Darstellung der an den Wellen befestigen Sensoranordnung,
- Figur 9: eine Explosionsdarstellung der Sensorkomponenten eines alternativen Ausführungsbeispiels sowie
- Figur 10: die Magnetfluss-Sammelelemente des alternativen Ausführungsbeispiels.

### Beschreibung der Ausführungsbeispiele

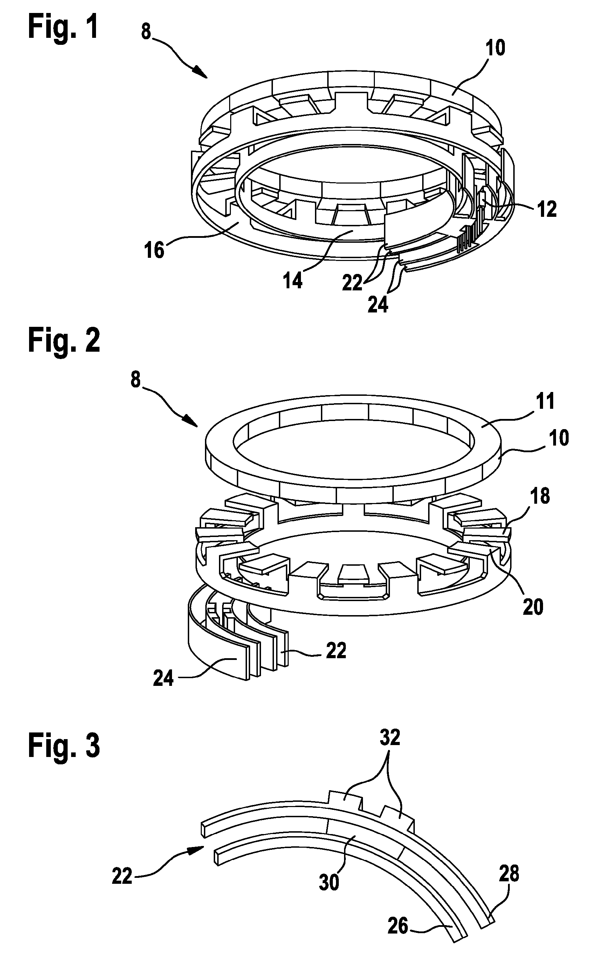

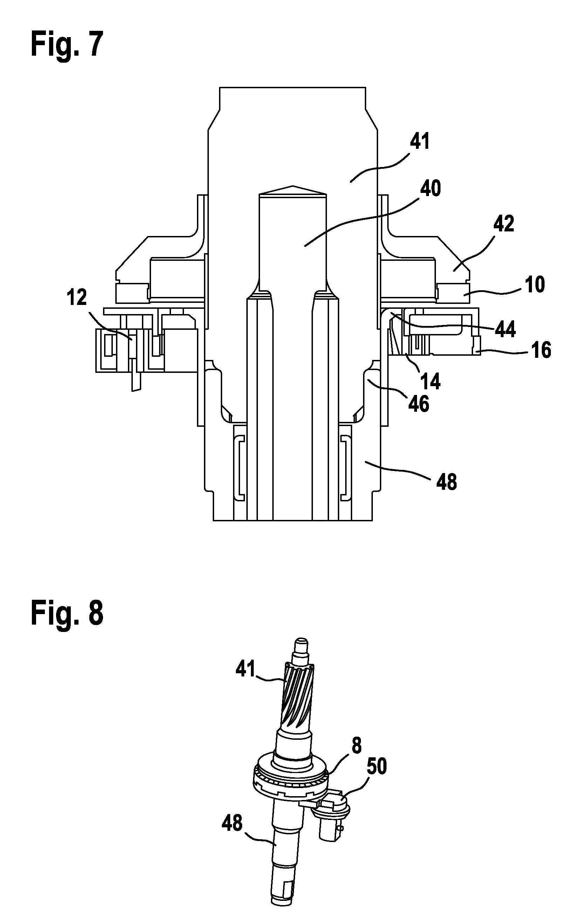

In Figur 1 sind die Komponenten einer Sensoranordnung 8 gezeigt. Ein Magnetpolrad 10 und Magnetfluss-Rückschlusselement 11 sind mit einer nicht dargestellten ersten Welle 41 verbunden. Eine zweite Welle 48, wie in Figur 7 und 8 beispielhaft gezeigt, steht mit einem ersten Fluxring 14 und zweiten Fluxring 16 in Verbindung. Die Achse der Wellen 41,48 definiert eine axiale Richtung, mit Blick auf die Rotationsachsen der Wellen 41, 48 wird eine radiale Richtung definiert. Der erste Fluxring 14 ist auf einem inneren Radius angeordnet und wird von einem zweiten Fluxring 16, der auf einem äußeren Radius angeordnet ist, umgeben. Ausgehend von dem ersten Fluxring 14 sind in regelmäßigen Abständen in Umfangsrichtung erste Zähne 18 ausgebildet, die sich in radialer Richtung vom Durchmesser des ersten Fluxringes ausgehend nach außen hin erstrecken. Auch von dem zweiten Fluxring 16 gehen in regelmäßigen Abständen zweite Zähne 20 aus, die ebenfalls in radialer Richtung orientiert sind. Die zweiten Zähne 20 weisen denselben axialen Abstand zu dem Magnetpolrad 10 auf wie auch die ersten Zähne 18. Die Abstände zwischen den Zähnen 18, 20 sind so gewählt, dass erste Zähne 18 und zweite Zähne 20 ineinander greifen. Der Abstand zwischen erster Zahn 18 und benachbartem zweiten Zahn 20 ist so gewählt, dass der im wesentlichen mit der Geometrie der Magnete des Magnetpolrads 10 übereinstimmt, d. h., beispielsweise mit dem Abstand von der Mitte eines Nordpolmagnetsegments zu der Mitte des benachbarten Südpolmagnetsegments. Zwischen erstem Fluxring 14 und zweitem Fluxring 16 ist zumindest ein Sensorelement 12 zur Erfassung des Magnetfelds angeordnet. In dem Bereich des Sensorelements 12 ist nun ein erstes Magnetfluss-Sammelelement 22 vorgesehen, bestehend aus erster Schale 26 und zweiter Schale 28, die jeweils innerhalb und außerhalb kreissegmentförmig parallel zum ersten Fluxring 14 angeordnet sind. Ein zweites Magnetfluss-Sammelelement 24 ist ebenfalls gleichlaufend zum zweiten Fluxring 16 angeordnet. Beide Magnetfluss-Sammelelemente 22, 24 sind kreissegmentförmig ausgebildet, d. h. im wesentlichen ringförmig wie in den Figuren 1 - 3 gezeigt.

Das erste Magnetfluss-Sammelelement 22 besteht aus einer ersten Schale 26 und einer zweiten Schale 28, die durch ein Magnetflussstück 30 mechanisch wie auch magnetisch miteinander verbunden werden. Dieses Magnetflussstück 30 weist einen axialen Abstand zum Fluxring 14 auf, um die axialen Toleranzen des Fluxrings 14 aufnehmen zu können. Der Radius der beiden Schalen 26, 28 ist hierbei so gewählt, dass dazwischen der erste Fluxring 14 angeordnet werden kann. An der zum Sensorelement 12 hin orientierten zweiten Schale 28 sind zwei vorzugsweise plane Verjüngungen 32 angebracht, über die der magnetische Fluss dem ersten und einem weiteren Sensorelement 12 zugeleitet wird. Die beiden Magnetfluss-Sammelelemente 22, 24 dienen zur Entwärmung der Sensorelemente 12, da diese an ihren beiden Verjüngungen 32 die Sensorelemente 12 vorzugsweise vollständig kontaktieren. Wie Figur 2 zu entnehmen ist, weist auch das zweite Magnetfluss-Sammelelement 24 auf der zu den Sensorelementen 12 hin orientierten Schale solche Verjüngungen 32 auf.

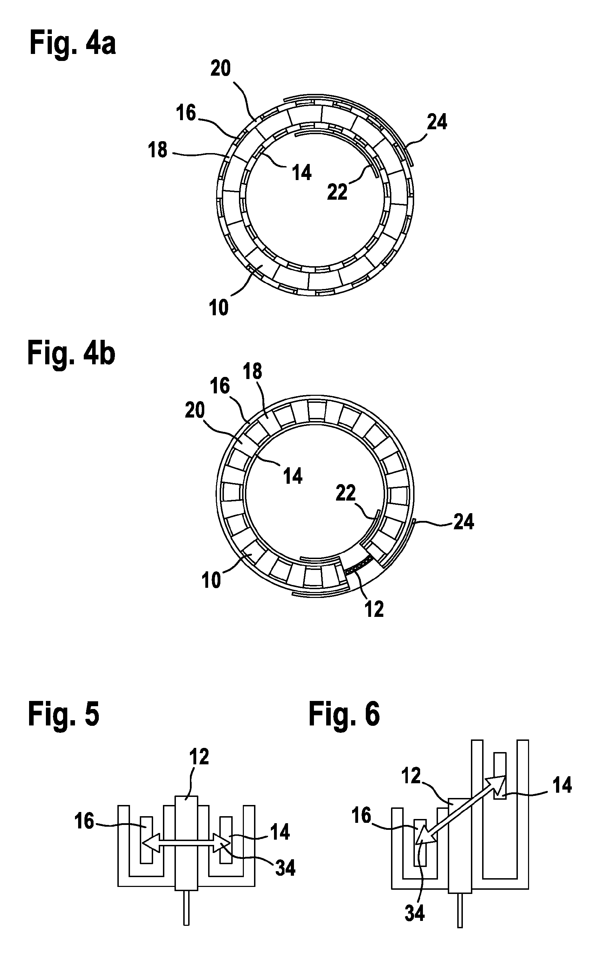

Die Figuren 4a und 4b zeigen die magnetische Nullstellung der Zähne 18, 20 zu den Magneten des Magnetpolrads 10 in der Draufsicht von oben und von unten. Unterschiedliche Farbgebung des Magnetpolrads 10 soll andeuten, dass magnetische Südpole und Nordpole im Wechsel zu einander angeordnet sind. In der magnetischen Nullstellung befinden sich die Zähne 18, 20 in der Mitte der Magnetpolübergangs, d. h., die Mitte der Zähne 18,20 befinden sich genau an dem Übergang von Süd- zu Nordpol. Damit liegt an beiden Fluxringen 14, 16 die gleiche magnetische Spannung an. Damit ist auch die Feldstärke im Luftspalt zwischen ersten Fluxring und zweiten Fluxring 14, 16 Null mT.

Bei dem Ausführungsbeispiel nach den Figuren 5 und 6 ist eine Maßnahme zur Verkleinerung des magnetischen Nebenschlusses vorgesehen. So kann der magnetische Nebenschluss verkleinert werden, indem der Abstand 34 zwischen erstem und zweitem Fluxring 14, 16 bzw. den entsprechenden Stegen der Fluxsringe 14, 16 vergrößert wird. Dies erfolgt durch axiales Versetzen der Fluxringstege, so dass der magnetische Nebenschlusswiderstand vergrößert wird.

Zur Messung eines Drehmoments ist der Torsionsstab 40 auf der einen Seite mit dem Magnetpolrad 10 über einen Magnetpolhalter 42 und der ersten Welle 41 verbunden. Auf der anderen Seite des Torsionsstabes 40 wird ein Fluxringhalter 44 mit den integrierten Fluxringen 14, 16 über die zweite Welle 48 verbunden. Eine entsprechende Anordnung ist in Figur 8 gezeigt, bei der die Sensoranordnung 8 mit einem Sensormodul 50 versehen ist, in welchem die Sensorelemente 12 und Magnetfluss-Sammelelemente 22, 24 integriert sind.

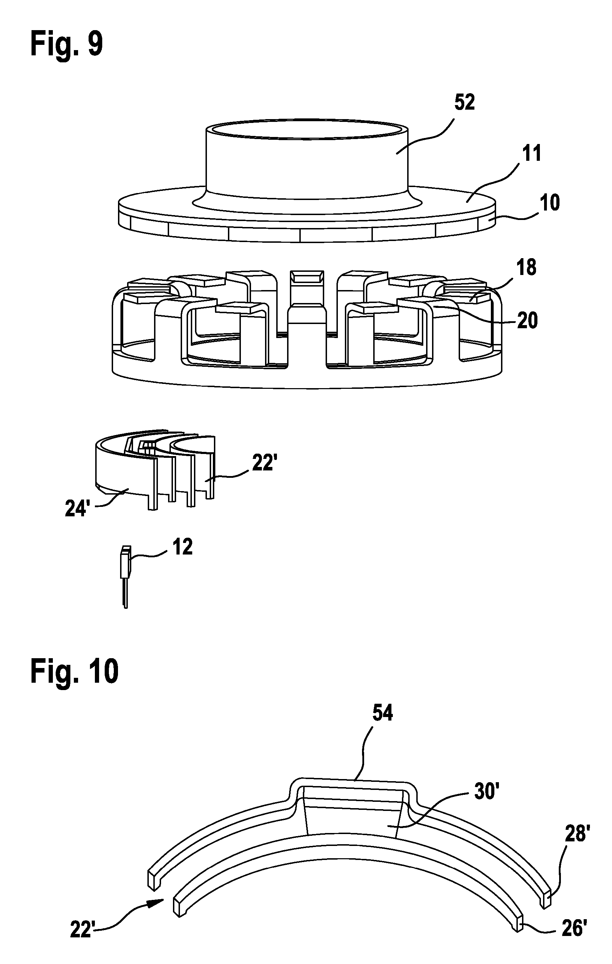

Das in den Figuren 9 und 10 gezeigte alternative Ausführungsbeispiel unterscheidet sich zum einen von dem der Figuren 1 bis 8 darin, dass nun eine Hülse 52 vorgesehen ist, die mit dem Magnetfluss-Rückschlusselement 11 verbunden ist. Vorzugsweise sind Hülse 52 und Magnetfluss-Rückschlusselement 11 als ein Teil ausgeführt. Die Hülse 52 dient der Befestigung des Magnetpolrads 10 an der ersten Welle 41. Außerdem sind weist nun die zweite Schale 28' des ersten Magnetfluss-Sammelelements 22' eine Ausformung 54 auf, die in radialer Richtung versetzt angeordnet ist gegenüber der kreissegmentförmigen Struktur der zweiten Schale 28'. Diese Ausformung 54 übernimmt die Funktionalität der Verjüngungen 32 des ersten Ausführungsbeispiels. Die Form der Ausformung 54 ist an die angrenzende Oberfläche des Sensorelements 12 angepasst, im vorliegenden eine plane Fläche. In entsprechender Weise weist auch die dem Sensorelement nächstliegende Schale eine entsprechende Ausformung auf zur Zuleitung des gesammelten magnetischen Flusses und gegebenenfalls der vom Sensorelement 12 produzierten Wärme.

Die in der Zeichnung dargestellten Ausführungsbeispiele arbeiten wie folgt. Wird zwischen der ersten Welle 41 und der zweiten Welle 48 ein Drehmoment erzeugt, so tordiert der Torsionsstab 40. Dadurch entsteht eine Winkeldifferenz zwischen dem Magnetpolrad 10 und den Fluxringen 14, 16. Durch diese Winkeldifferenz wird eine magnetische Feldstärkeänderung im Bereich des Sensorelements 12 erzeugt, welches in ein vom Drehmoment abhängiges elektrisches Signal umgewandelt werden kann. Eine Lagerung 46 zwischen den beiden Wellen 41, 48 kann die Luftspalttoleranzen günstig beeinflussen. Das Magnetfeld des Magnetpolrads 10 wird nun stirnseitig bzw. radial abgegriffen, indem die ersten und zweiten Zähne 18, 20 in radialer Richtung orientiert sind und im wesentlichen auf dem selben Radius liegen wie die Magnete des Magnetpolrads 10. Die Oberflächen von den ineinander greifenden ersten und zweiten Zähnen 18, 20, die zum Magnetpolrad 10 hin orientiert sind, halten im wesentlichen denselben axialen Abstand zu dem Magnetpolrad 10 auf. Durch den radialen Abgriff des Magnetfelds des Magnetpolrads 10 wirkt sich ein axialer Versatz mit Blick auf die auszuwertende Verdrehung zwischen Magnetpolrad 10 und Fluxringe 14, 16 nicht gravierend aus. Dadurch verbessern sich die Eigenschaften der Sensoranordnung 8, da axiale mechanische Verschiebungen bzw. Toleranzen zwischen den Zähnen 18,20 und des Magnetpolrads 10 reduziert werden.

Die Magnetfluss-Sammelelemente 22, 24 sind gegenüber den entsprechenden Fluxringen 14, 16 ortsfest postiert, d. h., die Fluxringe 14, 16 können sich um die Drehachse frei drehen, ohne dass die örtlich festen Magnetfluss-Sammelelemente 22, 24 berührt werden. Zwischen den beiden Magnetfluss-Sammelelementen 22, 24 befinden sich die Sensorelemente 12, die ebenfalls zwischen den Sammelelementen 22, 24 ortsfest platziert sind zur Messung der Variation der Magnetfeldstärke. Diese ortsfest angeordneten Komponenten (Sensorelemente 12, Magnetfluss-Sammelelemente 22, 24) sind gemäß Figur 8 in dem Sensormodul 50 integriert. Ein Magnetfluss-Sammelelement 22, 24 besteht aus zwei Schalen 26,28, die in radialer Richtung innerhalb und außerhalb zu dem jeweiligen Fluxring 14, 16 angeordnet sind. In Richtung zu den Sensorelementen 12 weisen diese Schalenelemente 26, 28 eine Verjüngung auf 32 auf, um den Magnetfluss gezielt über die Sensorelemente 12 zu lenken. Die Form der Verjüngung 32 ist hierbei an die Form desjenigen Abschnitts des Sensorelements 12 angepasst, der in unmittelbarer Nähe zu der Verjüngung 32 angeordnet ist. Neben der Funktionalität der gezielten Zuleitung des Magnetflusses dient die Verjüngung 32 in Verbindung mit den Schalen 26, 28 auch als Wärmesenke für das Sensorelement 12. Hierzu ist der Abstand der Verjüngung 32 zu dem Sensorelement 12 direkt kontaktierend oder zumindest sehr gering zu wählen, beispielsweise zwischen 0,5 und 0 mm. Die Wärme des Sensorelements 12 wird insbesondere von den Schalen 26, 28 aufgenommen. Alternativ kommt die in den Figuren 9 und 10 gezeigte Ausformung 54 zum Einsatz, die die Funktionalität der Verjüngung übernimmt, jedoch eine einfachere Herstellung zulässt.

Zwischen den Schalen 26, 28 befindet sich das Magnetflussstück 30, welches die beiden Schalen 26, 28 miteinander mechanisch und magnetisch verbindet. Bei gängigen Lenkgetriebelagerungen sind axiale Verschiebungen und Toleranz höher als radiale bzw. tangentiale, denn die Lager besitzen in axialer Richtung eine geringere Steifigkeit. Der Abstand des Magnetflussstücks 30 von dem jeweiligen Fluxring 14, 16 in axialer Richtung ist so gewählt, dass Toleranzen in axialer Richtung ausgeglichen werden können. Der Abstand liegt beispielsweise in der Größenordnung zwischen 1 und 2 mm. Das Magnetflussstück 30 dient somit nicht dazu, den magnetischen Fluss zu sammeln, da es zu weit von dem Fluxring 14, 16 angeordnet ist. Es ist insbesondere zur Weiterleitung des magnetischen Flusses von er ersten Schale 26 zur zweiten Schale 28 vorgesehen, um über die Verjüngung 32 dem Sensorelement 12 zur weiteren Auswertung zugeführt zu werden.

Durch die stirnseitige bzw. radiale Ausrichtung der Zähne 18,20 zu dem Magnetpolrad 10 ist es möglich, diese Elemente exakt mit einem definierten Luftspalt zueinander auszurichten. Dadurch reduziert sich der Luftspalt, was sich positiv auf den Gesamtmagnetfluss und auf die Umlaufmodulation auswirkt. Die Zähne 18, 20 der beiden Fluxringe 14, 16 liegen vorzugsweise auf derselben Ebene, greifen ineinander und sind radial angeordnet. Eine radiale Bewegung zwischen den Fluxringen 14, 16 und dem Magnetpolrad 10 bewirkt kaum eine Änderung des Magnetflusses, da die Zähne 18, 20 in radialer Richtung den Magneten des Magnetpolrads 10 überdecken und somit diese Radialverschiebung nicht in eine Luftspaltänderung eingeht. Da die Zähne 18,20 der Fluxringe 14, 16 stirnseitig zu den Magneten des Magnetpolrads 10 positioniert sind, ist es möglich, das Magnetfluss-Rückschlusselement 11 an der den Zähnen 18, 20 abgewandten Seite des Magnetpolrads 10 zu integrieren, welches den Gesamtmagnetfluss erhöht und die Anordnung dadurch robuster gegen äußere magnetische Störfelder macht.

Die Schalenausführung 26, 28 der Magnetfluss-Sammelelemente 22, 24 ermöglicht es, dass der entsprechende Fluxring 14, 16 in axialer Richtung in das Magnetfluss-Sammelelement 22, 24 eintauchen kann. Dadurch kann eine axiale Bewegung der Fluxringe 14, 16 relativ zum Magnetfluss-Sammelelement 22, 24 kompensiert werden, ohne den Magnetfluss dadurch zu beeinflussen. Des Weiteren kann der magnetische Nebenschluss verkleinert werden, indem der Abstand zwischen den beiden Stegen der Fluxringe 14, 16 vergrößert wird. Durch axiales Versetzen der Stege der Fluxringe 14, 16 wird der Abstand und damit der magnetische Nebenschlusswiderstand vergrößert. Bei der Umspritzung der Fluxringe 14, 16 mit dem Fluxringhalter 44 entsteht keine Nahtstelle im Umlaufbereich des örtlich festen Sensorelements 12, weil keine radialen Schieber im Werkzeug verwendet werden müssen. Dies bedeutet, dass Kunststoffgrate durch einen solchen Rohransatz vermieden werden. Dadurch kommt es nicht zu einem Verklemmen des Sensorelements 12 im Luftspalt der Fluxringe 14, 16. Ein weiterer Vorteil dieser Lösung ist die Verringerung der Materialmenge der Fluxringe 14, 16, da keine runde Geometrie aus einem Blech gestanzt werden muss, was zu Mehrverschnitt führen würde. Nach erfolgter Stanzung werden die Blechabschnitte gebogen und am Ende zu einem Fluxring 14, 16 verbunden. Die Fluxringe 14, 16 (z. B. NiFe gefüllter Kunststoff) und deren Fluxringhalter 44 können in einem Zwei- Komponentenspritzwerkzeug gleichzeitig gespritzt werden. Dadurch lässt sich eine hohe Positionsgenauigkeit zwischen den Fluxringen 14, 16 erreichen. Dieser konstruktive Aufbau ermöglicht es, die gesamte Sensoranordnung 8 samt den Magneten des Magnetpolrads 10 und Fluxringe 14, 16 in axialer Richtung zu montieren. Eine andere Montagerichtung ist nicht notwendig.

## Patentansprüche

1. Sensoranordnung zur Erfassung eines Differenzwinkels mit mindestens einem magnetfeldempfindlichen Sensorelement (12), mit dem die Magnetfeldinformationen eines Magnetkreises, bestehend aus einem mit einer Welle (41) verbindbaren Magnetpolrad (10) und ferromagnetischen Fluxringen (14, 16) mit Zähnen (18, 20) auswertbar ist, wobei die Zähne (18, 20) in radialer Richtung der Welle (41) verlaufen zum radialen Abgriff der Magnetfeldinformation des Magnetpolrads (10) und in radialer Richtung ineinandergreifen, wobei die Fluxringe (14, 16) unterschiedliche Radien aufweisen, wobei zumindest ein Magnetfluss-Sammelelement (22, 24) vorgesehen ist zum Sammeln des Magnetflusses zumindest eines Fluxrings (14, 16) und das Magnetfluss-Sammelelement (22, 24) eine erste Schale (26) und eine zweite Schale (28) aufweist mit unterschiedlichen Radien parallel zum Fluxring (14, 16).

2. Sensoranordnung nach Anspruch 1, **dadurch gekennzeichnet, dass** erste Zähne (18) mit einem ersten Fluxring (14) und zweite Zähne (20) mit einem zweiten Fluxring (16) verbunden sind.

3. Sensoranordnung nach einem der vorhergehenden Ansprüche, **dadurch gekennzeichnet, dass** radial ausgerichtete erste und zweite Zähne (18, 20) denselben axialen Abstand zu dem Magnetpolrad (10) aufweisen.

4. Sensoranordnung nach einem der vorhergehenden Ansprüche, **dadurch gekennzeichnet, dass** erste Schale (26) und zweite Schale (28) durch ein Magnetflussstück (30) mechanisch und magnetisch miteinander verbunden sind.

5. Sensoranordnung nach einem der vorhergehenden Ansprüche, **dadurch gekennzeichnet, dass** die Schale (26, 28) eine Verjüngung (32) oder Ausformung (54) aufweist zur gezielten Zuführung des Magnetfeldes zu dem Sensorelement (12).

6. Sensoranordnung nach einem der vorhergehenden Ansprüche, **dadurch gekennzeichnet, dass** Verjüngung (32) oder Ausformung (54) und/oder Schale (26, 28) vorgesehen sind zur Wärmeabfuhr des Sensorelements (12).

7. Sensoranordnung nach einem der vorhergehenden Ansprüche, **dadurch gekennzeichnet, dass** die Verjüngung (32) oder Ausformung (54) in unmittelbarer Nähe zum Sensorelement (12) angeordnet ist.

8. Sensoranordnung nach einem der vorhergehenden Ansprüche, **dadurch gekennzeichnet, dass** der erste Fluxring (14) axial beabstandet vom zweiten Fluxring (16) angeordnet ist.

9. Sensoranordnung nach einem der vorhergehenden Ansprüche, **dadurch gekennzeichnet, dass** zumindest Sensorelement (12) und/oder Magnetfluss-Sammelelement (22, 24) ortsfest gegenüber dem Fluxring (14, 16) angeordnet sind.

10. Sensoranordnung nach einem der vorhergehenden Ansprüche, **dadurch gekennzeichnet, dass** zumindest ein Magnetfluss-Rückschlusselement (11) auf der von den Zähnen (18, 20) entfernten Seite des Magnetpolrads (10) angeordnet ist.

11. Sensoranordnung nach einem der vorhergehenden Ansprüche, **dadurch gekennzeichnet, dass** das Magnetfluss-Rückschlusselement (11) Teil einer Hülse (52) ist, die der Befestigung des Magnetpolrads (10) dient.

## Claims

1. Sensor arrangement for detecting a differential angle, having at least one magnetic field-sensitive sensor element (12) that is able to evaluate the magnetic field information of a magnetic circuit consisting of a magnetic pole wheel (10), which is connectable to a shaft (41), and ferromagnetic flux rings (14, 16) with teeth (18, 20), wherein the teeth (18, 20) extend in the radial direction of the shaft (41) for taking a radial reading of the magnetic field information of the magnetic pole wheel (10) and engaging in one another in the radial direction, wherein the flux rings (14, 16) have different radii, wherein at least one magnetic flux collecting element (22, 24) is provided for collecting the magnetic flux of at least one flux ring (14, 16) and the magnetic flux collecting element(22, 24) has a first shell (26) and a second shell (28) with different radii parallel to the flux ring (14, 16).

2. Sensor arrangement according to Claim 1, **characterized in that** first teeth (18) are connected to a first flux ring (14) and second teeth (20) are connected to a second flux ring (16).

3. Sensor arrangement according to one of the preceding claims, **characterized in that** radially aligned first and second teeth (18, 20) are at the same axial distance from the magnetic pole wheel (10).

4. Sensor arrangement according to one of the preceding claims, **characterized in that** the first shell (26) and second shell (28) are mechanically and magnetically connected to one another by a magnetic flux element (30).

5. Sensor arrangement according to one of the preceding claims, **characterized in that** the shell (26, 28) has a tapering (32) or shaping (54) for specifically leading the magnetic field to the sensor element (12).

6. Sensor arrangement according to one of the preceding claims, **characterized in that** the tapering (32) or shaping (54) and/or shell (26, 28) are provided for removing heat from the sensor element (12).

7. Sensor arrangement according to one of the preceding claims, **characterized in that** the tapering (32) or shaping (54) is arranged in the immediate vicinity of the sensor element (12).

8. Sensor arrangement according to one of the preceding claims, **characterized in that** the first flux ring (14) is arranged at a distance axially from the second flux ring (16).

9. Sensor arrangement according to one of the preceding claims, **characterized in that** at least the sensor element (12) and/or the magnetic flux collecting element (22, 24) is arranged so as to be fixed in place in relation to the flux ring (14, 16).

10. Sensor arrangement according to one of the preceding claims, **characterized in that** at least one magnetic flux yoke element (11) is arranged on the side of the magnetic pole wheel (10) directed away from the teeth (18, 20).

11. Sensor arrangement according to one of the preceding claims, **characterized in that** the magnetic flux yoke element (11) is part of a sleeve (52) that serves for fastening the magnetic pole wheel (10).

## Revendications

1. Dispositif capteur destiné à détecter une angle différentiel comportant au moins un élément capteur (12) sensible au champ magnétique, à l'aide duquel il est possible d'évaluer les informations de champ magnétique d'un circuit magnétique constitué d'une roue à pôles magnétiques (10) pouvant être reliée à un arbre (41) et d'anneaux de flux ferromagnétiques (14, 16) munis de dents (18, 20), dans lequel les dents (18, 20) s'étendent dans la direction radiale de l'arbre (41) à des fins d'obtention de l'information de champ magnétique de la roue à pôle magnétique (10) et s'engrènent les unes dans les autres dans la direction radiale, dans lequel les anneaux de flux (14, 16) présentent des rayons différents, dans lequel il est prévu au moins un élément collecteur de flux magnétique (22, 24) pour collecter le champ magnétique d'au moins un anneau de flux (14, 16) et l'élément collecteur de flux magnétique (22, 24) comporte une première enveloppe (26) et une seconde enveloppe (28) ayant des rayons différents parallèles à l'anneau de flux (14, 16).

2. Dispositif capteur selon la revendication 1, **caractérisé en ce que** des premières dents (18) sont reliées à un premier anneau de flux (14) et **en ce que** des secondes dents (20) sont reliées à un second anneau de flux (16).

3. Dispositif capteur selon l'une quelconque des revendications précédentes, **caractérisé en ce que** des premières et secondes dents (18, 20) orientées radialement présentent la même distance axiale par rapport à la roue à pôles magnétiques (10).

4. Dispositif capteur selon l'une quelconque des revendications précédentes, **caractérisé en ce que** la première enveloppe (26) et la seconde enveloppe (28) sont reliées l'une à l'autre mécaniquement et magnétiquement par une pièce de flux magnétique (30).

5. Dispositif capteur selon l'une quelconque des revendications précédentes, **caractérisé en ce que** l'enveloppe (26, 28) présente un rétrécissement (32) ou une déformation (54) destiné à l'acheminement ciblé du champ magnétique vers l'élément capteur (12).

6. Dispositif capteur selon l'une quelconque des revendications précédentes, **caractérisé en ce que** le rétrécissement (32) ou la déformation (54) et/ou l'enveloppe (26, 28) sont prévus pour la dissipation thermique de l'élément capteur (12).

7. Dispositif capteur selon l'une quelconque des revendications précédentes, **caractérisé en ce que** le rétrécissement (32) ou la déformation (54) est disposé à proximité immédiate de l'élément capteur (12).

8. Dispositif capteur selon l'une quelconque des revendications précédentes, **caractérisé en ce que** le premier anneau de flux (14) est espacé axialement du second anneau de flux (16).

9. Dispositif capteur selon l'une quelconque des revendications précédentes, **caractérisé en ce qu'**au moins l'élément capteur (12) et/ou l'élément collecteur de flux magnétique (22, 24) sont disposés de manière stationnaire en face de l'anneau de flux (14, 16).

10. Dispositif capteur selon l'une quelconque des revendications précédentes, **caractérisé en ce qu'**au moins un élément de retour de flux magnétique (11) est disposé du côté de la route à pôles magnétiques (10) qui est éloigné des dents (18, 20).

11. Dispositif capteur selon l'une quelconque des revendications précédentes, **caractérisé en ce que** l'élément de retour de flux magnétique (11) fait partie d'un manchon (52) qui sert à fixer la roue à pôles magnétiques (10).
